# EUROPEAN PATENT APPLICATION

(11) **EP 4 686 866 A1**
(43) Date of publication of application: **04.02.2026**
(21) Application number: 24192444.8
(22) Date of filing: 01.08.2024
(51) Int. Cl.: F16L 35/00

(54) **HOSE PROTECTION DEVICE**

(71) Applicant: ZhongShan QingYi Metal Products Enterprise Co., Ltd., ZhongShan City, Guangdong (CN)
(72) Inventor: Zou, You Bo, ZhongShan City (CN); Liang, Huanzhao, ZhongShan City (CN); LI, Shulong, ZhongShan City (CN); YU, Tang Chieh, Taichung City (TW)
(74) Representative: Cabinet Chaillot

(57) **Abstract**

A hose protection device has an inner tube (1) and an outer sleeve (2). One end of the inner tube (1) is connected to a hose (3). Another end of the inner tube (1) is connected to a connector (4) configured for connecting a water gun nozzle. The outer sleeve (2) is fitted on and rotatably connected to the inner tube (1). The hose protection device has the effect of towing the hose (3) easily.

## Description

### FIELD OF THE INVENTION

The present invention relates to the technical field of garden hoses, and more particularly, to a hose protection device.

### BACKGROUND OF THE INVENTION

Hoses are widely used in modern landscaping and agricultural irrigation, and they are an essential tool for large-area watering and sprinkling. In general, one end of a conventional hose is connected to a water source, and the other end is connected to a water gun nozzle to control the spray pattern and range of the water flow when in use. The water gun nozzle is fixed to the end of the hose by means of a threaded or other mechanical connection. Although this design is simple, there are some deficiencies in actual operation.

First of all, due to the flexible nature of the hose, the hose is prone to curling and bending when the user holds the hose and moves or adjusts the direction of spraying water. Such curls and bends may not only block the water flow inside the hose, affecting the spraying effect, but may also increase the resistance when the user tows the hose, making the operation more laborious. This inconvenience is particularly obvious when the hose has to be moved over a long distance or operated on uneven ground.

Secondly, although the connection between the water gun nozzle and the hose is stable, if the hose is twisted too much, this fixed connection is not flexible enough when the spray angle and direction need to be adjusted frequently. The user needs to rotate or swing the water gun nozzle forcibly to achieve the desired spraying effect. This increases the complexity and labor intensity of the operation.

Accordingly, the inventor of the present invention has devoted himself based on his many years of practical experiences to solve these problems.

### SUMMARY OF THE INVENTION

In view of the deficiencies of the prior art, the primary object of the present invention is to provide a hose protection device which is convenient for towing a hose.

In order to achieve the foregoing object, the hose protection device provided by the present invention comprises an inner tube and an outer sleeve. One end of the inner tube is connected to a hose. Another end of the inner tube is connected to a connector configured for connecting a water gun nozzle. The outer sleeve is fitted on and rotatably connected to the inner tube.

Preferably, an outer wall of the inner tube has an upper limit projection and a lower limit projection. An inner wall of the outer sleeve has an upper positioning step and a lower positioning step. The upper positioning step interlocks with the upper limit projection from below, and the lower positioning step interlocks with the lower limit projection from above, so that an axial limit and circumferential rotation connection is formed between the outer sleeve and the inner tube.

Preferably, the outer sleeve further has a first guide bevel connected to an upper side of the upper positioning step and a second guide bevel connected to an upper side the lower positioning step.

Preferably, the upper limit projection has an outer diameter greater than that of the lower limit projection.

Preferably, one end of the hose, connected to the inner tube, is sleeved with a rigid sleeve.

Preferably, the rigid sleeve is a copper sleeve.

Preferably, an outer wall of the inner tube has a plurality of annular ribs configured for reducing contact between the inner tube and the outer sleeve.

Preferably, one end of the connector is firmly mounted to the inner tube by means of a fixed fit, and another end of the connector is formed with a male thread or a female thread for connecting the water gun nozzle.

Preferably, a flexible non-slip sleeve is provided on the outer sleeve.

Preferably, an upper end of the inner tube extends out of an upper end of the outer sleeve.

Compared with the prior art, the present invention has the following advantages:
1. The outer sleeve is fitted on and rotatably connected to the inner tube. This rotary connection mechanism allows the outer sleeve to rotate freely relative to the inner tube when the hose is subjected to twisting force. This rotary action helps release the accumulated twisting force and prevents damage to the hose due to excessive twisting. This design not only reduces the extra burden on the user during operation but also extends the service life of the hose greatly. In addition, this auto-rotation untwisting feature improves the overall efficiency of the plumbing system. In the design of conventional non-rotating hoses, twisting often results in obstruction of the water flow, reducing the water pressure and flow rate and affecting the spray effect of the water gun nozzle. Through this auto-rotation mechanism, the hose maintains optimal water flow at all times, ensuring maximum spray efficiency of the water gun nozzle.
2. Through the upper limit projection and the lower limit projection on the outer wall of the inner tube as well as the upper positioning step and the lower positioning step on the inner wall of the outer sleeve, the steps interlock with the respective projections on the inner tube to ensure precise alignment between the inner tube and the outer sleeve. This design allows the outer sleeve to rotate tightly around the inner tube, ensuring smooth and reliable rotation while maintaining axial stability.

### BRIEF DESCRIPTION OF THE DRAWINGS

FIG. 1 is a perspective view of the present invention;
FIG. 2 is an exploded view of the present invention;
FIG. 3 is a cross-sectional view of the present invention; and
FIG. 4 is an enlarged view of circle A of FIG. 3.

### DETAILED DESCRIPTION OF THE PREFERRED EMBODIMENTS

Embodiments of the present invention will now be described, by way of example only, with reference to the accompanying drawings.

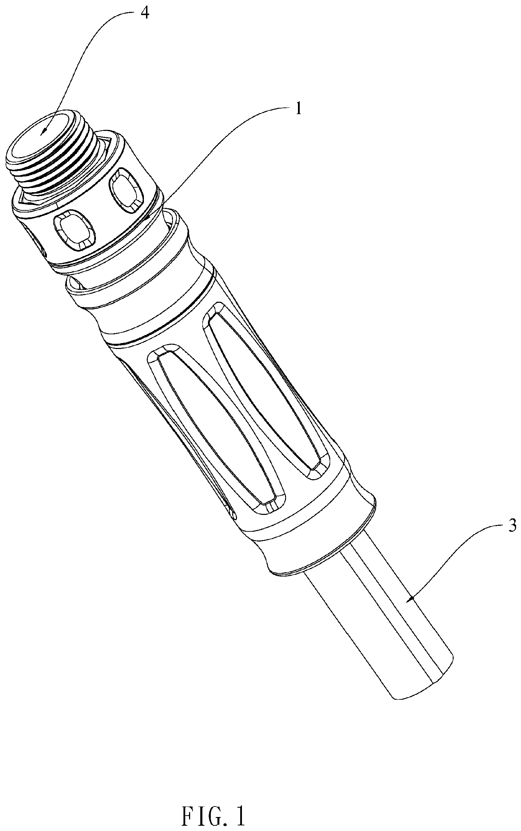

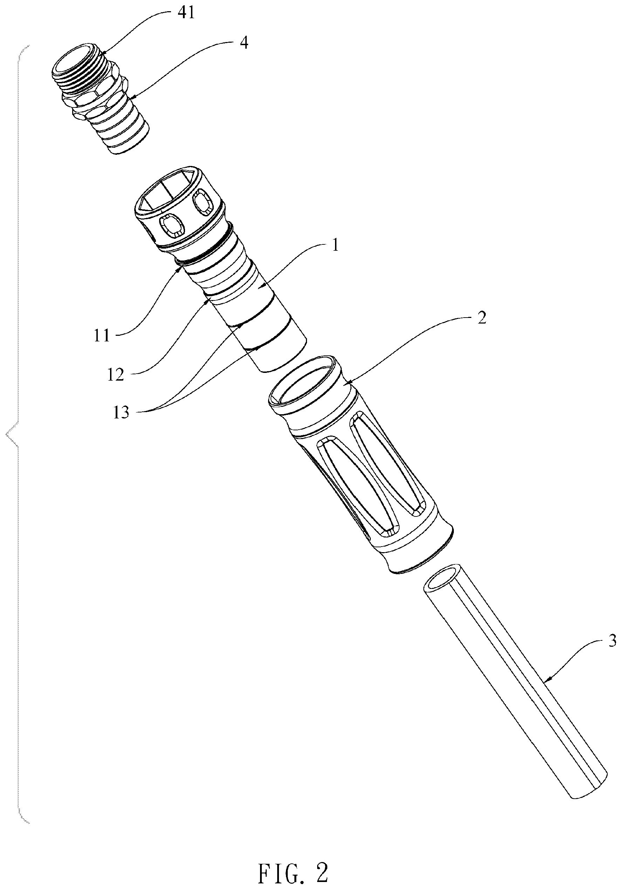

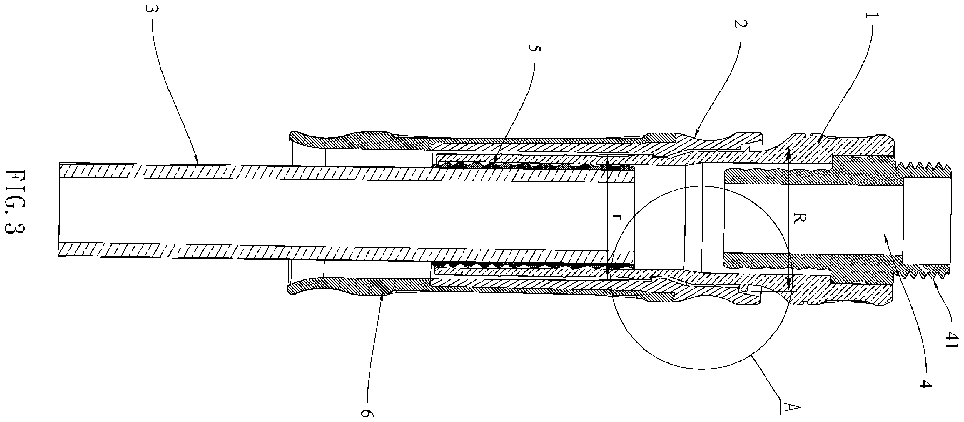

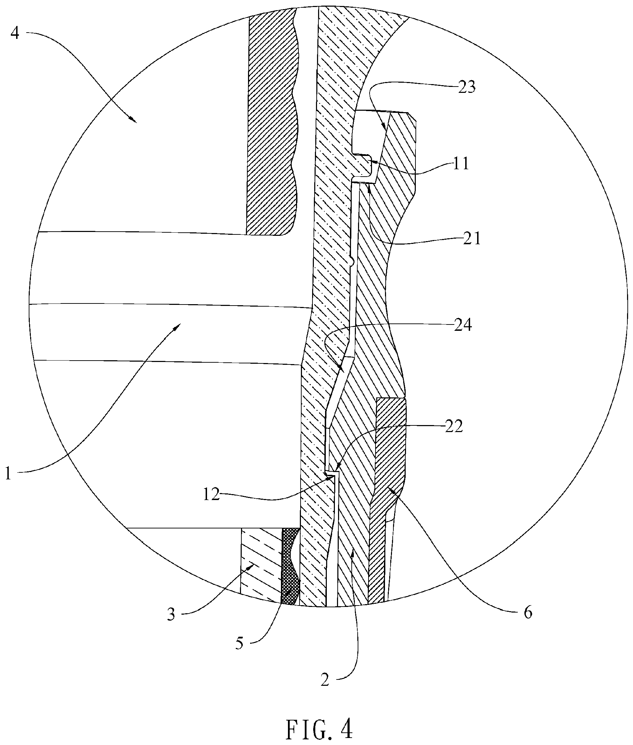

As shown in FIG. 1 through FIG. 4, the present invention discloses a hose protection device, comprising an inner tube 1 and an outer sleeve 2. One end of the inner tube 1 is stably connected to a hose 3 to ensure unimpeded water flow. The other end of the inner tube 1 is equipped with a connector 4. The connector 4 is seamlessly connected to a water gun nozzle (not shown in the figure), so that the water gun nozzle can be installed easily and kept stably.

The feature of the present invention is the design of the outer sleeve 2. The outer sleeve 2 is fitted on and rotatably connected to the inner tube 1. This rotary connection mechanism allows the outer sleeve 2 to rotate freely relative to the inner tube 1, thereby effectively minimizing curling and bending of the hose and maintaining the continuity and stability of the water flow when the user operates the hose. In addition, the rotary design reduces friction resistance greatly as the hose is moved, making it easier to tow the hose.

When the user wants to move or adjust the position of the hose, he/she just holds the outer sleeve 2 to tow the hose. If the hose is twisted during towing, this design allows the inner tube 1 to automatically rotate under the twisting force, thereby undoing the twisted condition effectively.

In addition, when the user wants to adjust the spraying direction, if the hose is twisted too much, the rotary function of the outer sleeve 2 allows the water gun nozzle to rotate and swing freely. There is no need for the user to twist or adjust the hose with force, thus simplifying the operation process and reducing the labor intensity of the user greatly. This design not only improves ease of operation but also enhances spraying accuracy and efficiency.

More specifically, the above-mentioned rotary connection is described below. The outer wall of the inner tube 1 has two critical structures: an upper limit projection 11 and a lower limit projection 12. The design of the two projections not only ensures accurate alignment between the inner tube 1 and the outer sleeve 2 but also provides the necessary axial limit to prevent unwanted axial movement during rotation. The inner wall of the outer sleeve 2 has an upper positioning step 21 and a lower positioning step 22 corresponding to the upper limit projection 11 and the lower limit projection 12. The upper positioning step 21 interlocks with the upper limit projection 11 from below. The lower positioning step 22 interlocks with the lower limit projection 12 from above. This design allows the outer sleeve 2 to rotate tightly around the inner tube 1 while maintaining axial stability.

More specifically, for easy and accurate assembly, the outer sleeve 2 further has a first guide bevel 23 connected to the upper side of the upper positioning step 21 and a second guide bevel 24 connected to the upper side the lower positioning step 22. The design of the guide bevels not only helps guide the accurate alignment of the outer sleeve 2 and the inner tube 1 in the installation process but also reduces the resistance during installation, thus allowing the outer sleeve 2 to slide onto the inner tube 1 more smoothly.

In addition, in order to further simplify the assembly process, the outer diameter R of the upper limit projection 11 is greater than the outer diameter r of the lower limit projection 12. This design allows the outer sleeve 2 to be easily slipped onto the inner tube 1 from the bottom up during installation.

More specifically, one end of the hose 3, connected to the inner tube 1, is sleeved with a rigid sleeve 5. The rigid sleeve 5 is configured to protect the hose 3 from external damage while providing a strong connection point. Preferably, the rigid sleeve 5 is a copper sleeve. Furthermore, the design of the rigid sleeve 5 allows it to be riveted to the inner tube 1.

More specifically, in order to optimize the rotation performance and reduce friction between the inner tube 1 and the outer sleeve 2, the outer wall of the inner tube 1 of the present invention has a plurality of annular ribs 13. The ribs 13 are designed to reduce the area of direct contact between the inner tube 1 and the outer sleeve 2, thereby reducing frictional resistance during rotation.

In addition, the ribs 13 are beneficial to prevent adhesion between the outer sleeve 2 and the inner tube 1. This adhesion may cause difficulty in rotation, especially under prolonged use or in high humidity environments. By reducing the contact area, the ribs 13 effectively prevents this from happening and ensures the long-term stable operation of the plumbing system.

It is worth noting that, thanks to the ingenious rotational connection structure between the outer sleeve 2 and the inner tube 1, this design ensures that there is no interference or influence on the connector 4 during rotation. Therefore, the design of the connector 4 is flexible in a variety of structural forms and specifications to suit different applications.

In this embodiment, one end of the connector 4 is firmly mounted to the inner tube 1 by means of a fixed fit (e.g., interference fit, snap fit, etc.). This fixing ensures that the connector 4 is stable and reliable and is not prone to loosening or falling off. The other end of the connector 4 is designed to have a universal connection structure, and is threadedly connected to various types of water gun nozzles. Specifically, the end of the connector 4 is formed with a male thread 41 or a female thread, which allows the connector 4 to be flexibly adapted to different sizes of water gun nozzles.

More specifically, in order to enhance the comfort and safety of the user during operation, a flexible non-slip sleeve 6 is provided on the outer sleeve 2. Preferably, the non-slip sleeve 6 is a rubber sleeve. The main function of the non-slip sleeve is to provide a better grip and anti-slip effect when the user holds the hose for operation, ensuring stable control of the hose in all environments.

More specifically, the upper end of the inner tube 1 extends out of the upper end of the outer sleeve 2 to facilitate the connection and disconnection of the connector 4 or the water gun nozzle.

## Claims

1. A hose protection device, **characterized in that**: the hose protection device comprises an inner tube (1) and an outer sleeve (2), one end of the inner tube (1) is connected to a hose (3), another end of the inner tube (1) is connected to a connector (4) configured for connecting a water gun nozzle, the outer sleeve (2) is fitted on and rotatably connected to the inner tube (1).

2. The hose protection device as claimed in claim 1, **characterized in that** an outer wall of the inner tube (1) has an upper limit projection (11) and a lower limit projection (12), an inner wall of the outer sleeve (2) has an upper positioning step (21) and a lower positioning step (22), the upper positioning step (21) interlocks with the upper limit projection (11) from below, and the lower positioning step (22) interlocks with the lower limit projection (12) from above, so that an axial limit and circumferential rotation connection is formed between the outer sleeve (2) and the inner tube (1).

3. The hose protection device as claimed in claim 2, **characterized in that** the outer sleeve (2) further has a first guide bevel (23) connected to an upper side of the upper positioning step (21) and a second guide bevel (24) connected to an upper side the lower positioning step (22).

4. The hose protection device as claimed in claim 2, **characterized in that** the upper limit projection (11) has an outer diameter greater than that of the lower limit projection (12).

5. The hose protection device as claimed in claim 1, **characterized in that** one end of the hose (3), connected to the inner tube (1), is sleeved with a rigid sleeve (5).

6. The hose protection device as claimed in claim 5, **characterized in that** the rigid sleeve (5) is a copper sleeve.

7. The hose protection device as claimed in claim 1, **characterized in that** an outer wall of the inner tube (1) has a plurality of annular ribs (13) configured for reducing contact between the inner tube (1) and the outer sleeve (2).

8. The hose protection device as claimed in claim 1, **characterized in that** one end of the connector (4) is firmly mounted to the inner tube (1) by means of a fixed fit, and another end of the connector (4) is formed with a male thread (41) or a female thread for connecting the water gun nozzle.

9. The hose protection device as claimed in claim 1, **characterized in that** a flexible non-slip sleeve (6) is provided on the outer sleeve (2).

10. The hose protection device as claimed in claim 1, **characterized in that** an upper end of the inner tube (1) extends out of an upper end of the outer sleeve (2).
